# EUROPÄISCHE PATENTSCHRIFT

(11) **EP 2 924 928 B1**
(45) Veröffentlichungstag und Bekanntmachung des Hinweises auf die Patenterteilung: **17.07.2019**
(21) Anmeldenummer: 14161422.2
(22) Anmeldetag: 25.03.2014
(51) Int. Cl.: G05B 19/418, H04L 12/40, G05B 9/03

(54) **Empfänger-Netzwerkkomponente zum Betrieb in einem Kommunikationsnetzwerk und Verfahren zum Betreiben eines Kommunikationsnetzwerks**
Receiver network component for operation in a communication network and method for operation of a communication network
Composant de réseau récepteur destiné à fonctionner dans un réseau de communication et procédé de fonctionnement d'un réseau de communication

(43) Veröffentlichungstag der Anmeldung: 30.09.2015
(73) Patentinhaber: Siemens Aktiengesellschaft, 80333 München (DE)
(72) Erfinder: Heine, Holger, 90459 Nürnberg (DE); Hoga, Clemens, 90403 Nürnberg (DE)

(56) Entgegenhaltungen:
- EP-A1- 2 148 473
- EP-A1- 2 362 577
- EP-A2- 0 854 610
- US-A1- 2005 232 145
- MARKUS RENTSCHLER ET AL: "The Parallel Redundancy Protocol for industrial IP networks", INDUSTRIAL TECHNOLOGY (ICIT), 2013 IEEE INTERNATIONAL CONFERENCE ON, IEEE, 25. Februar 2013 (2013-02-25), Seiten 1404-1409, XP032377292, DOI: 10.1109/ICIT.2013.6505877 ISBN: 978-1-4673-4567-5
- Hubert Kirrmann: "Highly Available Automation Networks Standard Redundancy Methods, Rationales behind the IEC 62439 standard suite", , 2012, XP002728679, Gefunden im Internet: URL:http://www.google.nl/url?url=http://la mspeople.epfl.ch/kirrmann/Pubs/IEC_61439-1 /IEC_62439_Summary.ppt&rct=j&frm=1&q=&esrc =s&sa=U&ei=TSvzU8XxGZKM4gSIgYGIAQ&ved=0CCw QFjAC&usg=AFQjCNH-U1tPdm-sbv3vzl6quEYciNJH og [gefunden am 2014-08-19]

## Beschreibung

Die Erfindung betrifft eine Empfänger-Netzwerkkomponente zum Betrieb in einem Kommunikationsnetzwerk eines Automatisierungssystems, wobei die Empfänger-Netzwerkkomponente dazu eingerichtet ist, von Sender-Netzwerkkomponenten des Kommunikationsnetzwerks redundant versendete Datentelegramme zu empfangen und Duplikate eines bereits empfangenen Datentelegramms zu verwerfen. Die Erfindung betrifft außerdem ein Kommunikationsnetzwerk eines Automatisierungssystems mit einer Mehrzahl von Netzwerkkomponenten, die zum Austausch von Datentelegrammen miteinander in Verbindung stehen, wobei der Austausch von Datentelegrammen redundant erfolgt, sowie ein Verfahren zum Betreiben eines solchen Kommunikationsnetzwerks.

Netzwerkkomponenten, also netzwerkfähige Geräte, die an ein Kommunikationsnetzwerk angeschlossen werden können und über dieses Daten durch Übertragung entsprechender Datentelegramme austauschen, werden heutzutage in vielen Bereichen der Technik, z.B. bei der Automatisierung von Anlagen, eingesetzt. Als Netzwerkkomponenten werden nachfolgend sowohl netzwerkfähige Endgeräte als auch solche Geräte angesehen, die zur Steuerung und Verwaltung der Übertragung von Datentelegrammen in dem Kommunikationsnetzwerk verwendet werden, also beispielsweise sogenannte "Switches", "Bridges", "Hubs", "Router". Nachfolgend werden zudem Begriffe wie "Empfänger-Netzwerkkomponente und "Sender-Netzwerkkomponente" verwendet, bei denen es sich ebenfalls um Netzwerkkomponenten im obigen Sinne handelt. Die Zusätze "Empfänger" und "Sender" sind hierbei nicht als einschränkend anzusehen und beschreiben lediglich im aktuellen Kontext die jeweilige Funktion im Rahmen der vorliegenden Kommunikationsphase (senden bzw. empfangen). Dabei kann auch eine Empfänger-Netzwerkkomponente durchaus während einer anderen Kommunikationsphase als Sender fungieren und umgekehrt.

Viele automatisiert betriebene Anlagen erfordern eine hohe Ausfallsicherheit. Diese Anforderung besitzt starke Auswirkungen auf das Kommunikationsnetzwerk, mit dem die Netzwerckomponenten einer solchen Anlage miteinander verbunden sind. Daher werden solche Kommunikationsnetzwerke üblicherweise redundant ausgelegt. Ein bevorzugter Ansatz hierbei besteht darin sicherzustellen, dass auch bei dem Ausfall einer Kommunikationsverbindung innerhalb des Kommunikationsnetzes die zuverlässige Übertragung von Datentelegrammen zwischen den einzelnen Netzwerkkomponenten gewährleistet ist. Der Begriff "Kommunikationsverbindung" umfasst hierbei für die komplette Übertragungsstrecke zwischen den jeweiligen Netzwerkkomponenten, also sowohl ein vorhandenes (drahtgebundenes oder drahtloses) Übertragungsmedium als auch dessen physikalische, kommunikationstechnische und logische Anbindung zu der jeweiligen Netzwerkkomponente (z.B. Schnittstellen, Kommunikationseinrichtungen, Protokollstacks).

Ein Beispiel für den Einsatz eines solchen ausfallsicher auszulegenden Kommunikationsnetzwerkes ist eine Automatisierungsanlage, in der Netzwerkkomponenten in Form von netzwerkfähigen Automatisierungsgeräten über das Kommunikationsnetzwerk miteinander zum Austausch von Datentelegrammen verbunden sind. Automatisierungsanlagen dienen zur Automatisierung von Systemen, z.B. elektrischen Energieversorgungsnetzen oder elektrischen Schaltanlagen, und umfassen üblicherweise Automatisierungsgeräte (z.B. sogenannte Feldgeräte), die in der Nähe von Primärkomponenten der entsprechenden Anlage, also z.B. des elektrischen Energieversorgungsnetzes, angeordnet sind. Solche Primärkomponenten können im Falle eines elektrischen Energieversorgungsnetzes beispielsweise elektrische Kabel und Leitungen, Transformatoren, Generatoren, Motoren oder Umrichter sein. Bei den Automatisierungsgeräten kann es sich beispielsweise um Messgeräte, sogenannte elektrische Schutzgeräte oder Feldleitgeräte handeln, die in Unterstationen elektrischer Energieversorgungsnetze installiert sind. In der Fachsprache werden solche Automatisierungsgeräte oft auch als sogenannte "IEDS" ("Intelligent Electronic Devices") bezeichnet. Die Automatisierungsgeräte sind hierbei mit dem Kommunikationsnetzwerk verbunden und tauschen darüber Datentelegramme aus, die als Nutzdaten beispielsweise Steuerbefehle, Meldungen über Ereignisse (z. B. Schwellenwertverletzungen), Messwerte oder Statusmeldungen umfassen.

Eine Möglichkeit, ein Kommunikationsnetzwerk hinsichtlich seiner Kommunikationsverbindungen ausfallsicher auszugestalten und dabei auch im Falle einer Störung einer Kommunikationsverbindung einen weitgehend nahtlosen Weiterbetrieb der Automatisierungsanlage zu gewährleisten, ist im Standard IEC 62439-3:2012 als sogenanntes "Parallel Redundancy Protocol" (PRP) beschrieben. Hierbei wird eine nahtlose Redundanz dadurch erreicht, dass das Kommunikationsnetzwerk zwei voneinander unabhängige Teilnetzwerke beliebiger Topologie aufweist und jede Netzwerkkomponente mit beiden Teilnetzwerken in Verbindung steht. Beide Teilnetzwerke arbeiten im Parallelbetrieb, wobei eine Sender-Netzwerkkomponente zum Versenden eines Datentelegramms dieses einerseits an das erste Teilnetzwerk und andererseits an das zweite Teilnetzwerk sendet. Die als Empfänger des Datentelegramms vorgesehene Empfänger-Netzwerkkomponente empfängt beide Datentelegramme aus den Teilnetzwerken, wobei sie das zuerst bei ihr eintreffende Datentelegramm verwendet und das später eintreffende Datentelegramm als Duplikat verwirft. Da die beiden Datentelegramme hierbei zwei voneinander unabhängige Übertragungswege nutzen, ist auch bei Vorliegen einer Störung auf einem der Übertragungswege sichergestellt, dass über den anderen - üblicherweise noch intakten - Übertragungsweg die mit dem Datentelegramm übermittelte Nutzinformation an die Empfänger-Netzwerckomponente gelangt. Die Verwendung eines gemäß dem PRP-Standard aufgebauten Kommunikationsnetzwerkes ist beispielsweise aus der Beschreibungseinleitung der Europäischen Patentanmeldung EP 2148473 A1 bekannt.

Kommunikationsnetzwerke, in denen Datentelegramme gemäß dem "Parallel Redundancy Protocol" übertragen werden, sind außerdem aus der EP 0 854 610 A2 und dem Aufsatz "The Parallel Redundancy Protocol for Industrial IP Networks"; Markus Rentschler und Holger Heine, Industrial Technology (ICIT), 2013 IEEE; Seiten 1404-1409 bekannt.

Als Alternativlösung für ein PRP-Kommunikationsnetzwerk schlägt die bereits genannte EP 2148473 A1 die Verwendung eines Kommunikationsnetzwerkes gemäß dem ebenfalls in der IEC 62439-3:2012 beschriebenen Standard zur High-Availability, Seamless Redundancy (HSR) vor. Ein HSR-Kommunikationsnetzwerk ist in einer Ringtopologie aufgebaut, wobei jede Netzwerkkomponente mit zwei Kommunikationsanschlüssen in den Ring eingebunden ist. Eine Sender-Netzwerkkomponente sendet ein Datentelegramm in beide Richtungen des Rings aus, die Empfänger-Netzwerkkomponente empfängt das zuerst eintreffende Datentelegramm und verwirft das zweite als Duplikat. Aufgrund der geschlossenen Ringstruktur existieren zwischen allen Netzwerkkomponenten immer zwei voneinander unabhängige Kommunikationswege, so dass auch bei einer Störung eines der beiden Kommunikationswege die Übertragung des Datentelegramms über den jeweiligen anderen Übertragungsweg sichergestellt ist.

PRP und HSR werden als Redundanzkonzepte in immer mehr Automatisierungsanlagen eingesetzt und stellen daher bevorzugte Ausbildungen von Kommunikationsnetzwerken zum Erreichen einer Redundanz bezüglich der Kommunikationsverbindungen dar. In der Zukunft kann davon ausgegangen werden, dass sich die Verwendung beider Ausführungsformen noch weiter etablieren wird.

Bei manchen Automatisierungsanlagen ist eine Redundanz, die sich auf den reinen Übertragungsweg der Datentelegramme bezieht, jedoch nicht ausreichend. So wird beispielsweise für Anlagen zur Hochspannungsgleichstromübertragung (HGÜ, im Englischen auch als "HVDC" - High Voltage Direct Current - Übertragung bezeichnet) oftmals auch die Redundanz von Sender-Netzwerkkomponenten selbst gefordert (geräteredundante Sender-Netzwerkkomponenten), die für den Betrieb der Anlagen wichtige Datentelegramme aussenden. Solche Datentelegramme beinhalten z.B. Nutzdaten, die sich auf die Ansteuerung von Stromrichtern der Anlagen beziehen. Auch in anderen Automatisierungsanlagen können Anforderungen hinsichtlich einer Redundanz auch auf der Ebene der Sender-Netzwerkkomponenten bestehen. Bisher werden für Kommunikationsnetzwerke mit redundanten Sender-Netzwerkkomponenten proprietäre Kommunikations- und Redundanzverfahren eingesetzt, so dass eine Interoperabilität von Netzwerkkomponenten unterschiedlicher Hersteller häufig nicht gegeben ist. Außerdem wird die Umsetzung der proprietären Redundanzverfahren oft auf Ebene der Applikation durchgeführt, wodurch die Verfahren nur vergleichsweise rechenaufwendig durchgeführt werden können.

Der Erfindung liegt daher die Aufgabe zugrunde, eine gattungsgemäße Empfänger-Netzwerkkomponente, ein gattungsgemäßes Kommunikationsnetzwerk sowie ein Verfahren zum Betrieb eines solchen Kommunikationsnetzwerks dergestalt anzugeben, dass auch für geräteredundante Sender-Netzwerkkomponenten einerseits eine Interoperabilität von Netzwerkkomponenten verschiedener Hersteller gewährleistet ist und andererseits mit vergleichsweise geringem Aufwand eine redundante Übermittlung von Datentelegrammen erreicht werden kann.

Zur Lösung dieser Aufgabe wird eine Empfänger-Netzwerkkomponente der eingangs genannten Art vorgeschlagen, wobei die Empfänger-Netzwerkkomponente dazu eingerichtet ist, beim Empfangen eines aktuellen Datentelegramms von einer der Sender-Netzwerkkomponenten dieses daraufhin zu überprüfen, ob von einer anderen Sender-Netzwerkkomponente bereits ein Datentelegramm mit identischen Nutzdaten empfangen worden ist, und ein Datentelegramm mit einem erstmalig empfangenen Nutzdateninhalt weiterzuverarbeiten, und ein Datentelegramm mit solchen Nutzdaten, die bereits in einem früheren Datentelegramm einer anderen Sender-Netzwerkkomponente empfangen worden sind, als Duplikat zu verwerfen, wobei die Empfänger-Netzwerkkomponente dazu eingerichtet ist, die Überprüfung des aktuell empfangenen Datentelegramms unter Verwendung einer in dem Datentelegramm enthaltenen Absenderkennzeichnung durchzuführen, wobei die Empfänger-Netzwerkkomponente eine Gruppeninformation über solche Sender-Netzwerkkomponenten umfasst, die während ihres Betriebs hinsichtlich ihres Nutzdateninhaltes identische Datentelegramme an die Empfänger-Netzwerkkomponente senden; und die Empfänger-Netzwerkkomponente dazu eingerichtet ist, die Überprüfung des aktuell empfangenen Datentelegramms unter Verwendung der Absenderkennzeichnung des aktuell empfangenen Datentelegramms und der Absenderkennzeichnungen der in der Gruppeninformation angegebenen Sender-Netzwerkkomponenten durchzuführen; und wobei die Gruppeninformation Absenderkennzeichnungen von Sender-Netzwerkkomponenten (12A-B) dergestalt enthält, dass eine Absenderkennzeichnung aller derjenigen Sender-Netzwerkkomponenten (12A-B), die während ihres Betriebs Datentelegramme mit identischem Nutzdateninhalt an die Empfänger-Netzwerkkomponente (13) senden, als Gruppen-Absenderkennzeichnung ausgewählt ist und die Absenderkennzeichnungen aller übrigen zugehörigen Sender-Netzwerkkomponenten (12A-B) der Gruppen-Absenderkennzeichnung zugeordnet werden.
Die erfindungsgemäße Empfänger-Netzwerkkomponente ermöglicht eine einfache Verarbeitung redundanter Datentelegramme, die von mehr als einer Sender-Netzwerkkomponente an die Empfänger-Netzwerkkomponente verwendet worden sind. Dadurch dass bei der erfindungsgemäßen Empfänger-Netzwerkkomponente in generell ähnlicher Weise wie bei den bekannten PRP- bzw. HSR-Verfahren eine Erkennung und Eliminierung von Duplikaten von redundant versendeten Datentelegrammen stattfindet, ist zudem auch die Interoperabilität von Geräten unterschiedlicher Hersteller gesichert, die bereits den PRP- oder HSR-Standard unterstützen und lediglich entsprechend der erfindungsgemäßen Empfänger-Netzwerkkomponente dazu ertüchtigt werden müssen, auch von mehreren Sender-Netzwerkkomponenten redundant versendete Datentelegramme zu verarbeiten.

Als Duplikat eines Datentelegramms wird hierbei ein solches bei der Empfänger-Netzwerkkomponente eintreffendes Datentelegramm angesehen, das weitgehend gleichzeitig wie ein bereits früher bei der Empfänger-Netzwerkkomponente eingetroffene Datentelegramm erzeugt worden ist und zu dem früher eingetroffenen Datentelegramm identische Nutzdaten enthält. Das Format, in dem die Nutzdaten in den Datentelegrammen übertragen werden, kann hierbei gleich oder unterschiedlich gewählt werden, es kommt lediglich auf die inhaltliche Identität an.

Erfindungsgemäß ist die Empfänger-Netzwerkkomponente dazu eingerichtet, die Überprüfung des aktuell empfangenen Datentelegramms unter Verwendung einer in dem Datentelegramm enthaltenen Absenderkennzeichnung durchzuführen.

Eine solche Absenderkennzeichnung gibt diejenige Sender-Netzwerkkomponente, die das jeweilige Datentelegramm versendet hat, eindeutig an. Als Absenderkennzeichnung kann beispielsweise eine MAC-Adresse (MAC - Media Access Control) der jeweiligen Sender-Netzwerkkomponente verwendet werden. Die Empfänger-Netzwerkkomponente muss bei dieser Ausführungsform keine explizite inhaltliche Überprüfung der empfangenen Datentelegramme durchführen, sondern greift zur Erkennung von Duplikaten auf die in dem empfangenen Datentelegramm enthaltene Absenderkennzeichnung zurück.

Hierzu umfasst die Empfänger-Netzwerkkomponente eine Gruppeninformation über solche Sender-Netzwerkkomponenten, die während ihres Betriebs hinsichtlich ihres Nutzdateninhaltes identische Datentelegramme an die Empfänger-Netzwerkkomponente senden, und dazu eingerichtet ist, die Überprüfung des aktuell empfangenen Datentelegramms unter Verwendung der Absenderkennzeichnung des aktuell empfangenen Datentelegramms und der Absenderkennzeichnungen der in der Gruppeninformation angegebenen Sender-Netzwerkkomponenten durchzuführen.

Hierbei stellt die Gruppeninformation beispielsweise eine Datei oder einen Teil einer Datei dar, worin zusammengehörige Sender-Netzwerkkomponenten angegeben sind. Als zusammengehörig werden Sender-Netzwerkkomponenten dann angesehen, wenn sie während ihres Betriebs Datentelegramme versenden, die hinsichtlich ihres Nutzdateninhalts identisch sind. Anhand der Absenderkennzeichnungen der in der Gruppeninformation angegebenen Sender-Netzwerkkomponenten kann die Empfänger-Netzwerkkomponente ein von einer Sender-Netzwerkkomponente eintreffendes Duplikat erkennen: ein inhaltsidentisches Datentelegramm wurde nämlich bereits zuvor von einer der weiteren in der Gruppeninformation angegebenen Sender-Netzwerkkomponenten empfangen.

Erfindungsgemäß enthält die Gruppeninformation Absenderkennzeichnungen von Sender-Netzwerkkomponenten dergestalt, dass eine Absenderkennzeichnung aller derjenigen Sender-Netzwerkkomponenten, die während ihres Betriebs Datentelegramme mit identischem Nutzdateninhalt an die Empfänger-Netzwerkkomponente senden, als Gruppen-Absenderkennzeichnung ausgewählt ist und die Absenderkennzeichnungen aller übrigen zugehörigen Sender-Netzwerkkomponenten der Gruppen-Absenderkennzeichnung zugeordnet werden.

Hierdurch wird eine besonders einfach aufgebaute Art der Gruppeninformation beschrieben. Sie enthält nämlich bereits von allen Sender-Netzwerkkomponenten, die während ihres Betriebs hinsichtlich ihres Nutzdateninhalts identische Datentelegramme an die Empfänger-Netzwerkkomponente versenden, die entsprechenden Absenderkennzeichnungen. Solche Sender-Netzwerkkomponenten werden nachfolgend auch als Gruppe bezeichnet. Eine der Absenderkennzeichnungen wird als sogenannte "Gruppen-Absenderkennzeichnung" ausgewählt und dient fortan zur CharakLerisierung der Gruppe. Bei Verwendung einer solchermaßen aufgebauten Gruppeninformation reicht es zur Erkennung von Duplikaten aus, wenn die Empfänger-Netzwerkkomponente alle in der Gruppeninformation enthaltenen Absenderkennzeichnungen mit der Gruppen-Absenderkennzeichnung der jeweiligen Gruppe gleichsetzt. Die Überprüfung des aktuell empfangenen Datentelegramms umfasst dann einerseits eine Übersetzung der in dem aktuell empfangenen Datentelegramm enthaltenen Absenderkennzeichnung in die Gruppen-Absenderkennzeichnung und andererseits einen Vergleich, ob ein hinsichtlich seines Nutzdateninhalts identisches Datentelegramm mit dieser Absenderkennzeichnung bereits zuvor eingetroffen ist. Dabei behält selbstverständlich diejenige Sender-Netzwerkkomponente, deren Absenderkennzeichnung als Gruppen-Absenderkennzeichnung verwendet wird, ihre Absenderkennzeichnung für die Überprüfung bei. Die Gruppeninformation kann dabei beispielsweise in Form einer Tabelle oder einer Textdatei mit einer ODER-Verknüpfung aller Absenderkennzeichnungen der zusammengehörigen Sender-Netzwerkkomponenten ausgebildet sein.

Eine vorteilhafte Ausführungsform der erfindungsgemäßen Netzwerkkomponente sieht vor, dass die Empfänger-Netzwerkkomponente dazu eingerichtet ist, die Überprüfung des aktuell empfangenen Datentelegramms unter Verwendung einer in dem Datentelegramm enthaltenen Sequenznummer durchzuführen.

Als Sequenznummer wird hierbei eine - zumindest innerhalb eines vordefinierten Zeitbereichs - eindeutige Nummer des Datentelegramms bezeichnet, aus der üblicherweise auch auf eine Reihenfolge der Datentelegramme geschlossen werden kann. Ein später versendetes Datentelegramm enthält folglich eine höhere Sequenznummer als ein früher versendetes Datentelegramm. Um den für die Sequenznummer verwendeten Datenbereich des Datentelegramms nicht zu hoch wählen zu müssen, wird üblicherweise ein Zeitbereich vordefiniert (z.B. 1 Sekunde oder 2,5 Sekunden) innerhalb dessen die Sequenznummern eindeutig sind. Nach Ablauf des Zeitbereichs beginnt die Sequenznummernvergabe erneut von vorn. Die Empfänger-Netzwerkkomponente kann nun dazu eingerichtet sein, die Sequenznummer zur Erkennung von Duplikaten heranzuziehen. Die Verwendung der Sequenznummer kann dabei alternativ oder zusätzlich zur Verwendung anderer Kriterien, wie z.B. einer Absenderkennzeichnung, erfolgen. Sofern Sequenznummern zur Erkennung von Duplikaten herangezogen werden, können beispielsweise die Sender-Netzwerkkomponenten hinsichtlich ihres Versendens von Datentelegrammen derart aufeinander abgestimmt sein, dass inhaltsidentischen Datentelegrammen von den verschiedenen Sender-Netzwerkkomponenten identische Sequenznummern zugeordnet werden. Dies kann beispielsweise durch eine Zeitsynchronisierung der Sender-Netzwerkkomponenten (beispielsweise unter Verwendung eines lpps-Zeitimpulses gemäß GPS oder des Zeitsynchronisationsprotokolls IEEE 1588) erreicht werden. Eine andere Möglichkeit besteht darin, seitens der Empfänger-Netzwerkkomponente eine gewisse "Unschärfe" der Sequenznummern zuzulassen und auch solche Datentelegramme als Duplikate zu erkennen, deren Sequenznummern zwar nicht exakt übereinstimmen, die aber ausreichend nah beieinanderliegen.

Gemäß einer weiteren vorteilhafte Ausführungsform ist die Empfänger-Netzwerkkomponente auch dazu eingerichtet ist, beim Empfangen eines aktuellen Datentelegramms zu überprüfen, ob von derselben Sender-Netzwerkkomponente bereits ein Datentelegramm mit identischen Nutzdaten empfangen worden ist, und ein Datentelegramm mit einem erstmalig empfangenen Nutzdateninhalt weiterzuverarbeiten und ein Datentelegramm mit solchen Nutzdaten, die bereits in einem früheren Datentelegramm derselben Sender-Netzwerkkomponente empfangen worden sind, als Duplikat zu verwerfen.

Gemäß dieser Ausführungsform wird die Empfänger-Netzwerkkomponente dazu ertüchtigt, in PRP- bzw. HSR-Kommunikationsnetzwerken betrieben zu werden, die einerseits klassische Sender-Netzwerkkomponenten (eine Sender-Netzwerkkomponente sendet redundante Datentelegramme aus) und andererseits geräteredundante Sender-Netzwerkkomponenten (zwei Sender-Netzwerkkomponenten senden redundante Datentelegramme aus) umfassen. Auf diese Weise kann durch eine relativ geringfügige Anpassung der Redundanzalgorithmen eine Einbindung von geräteredundanten Sender-Netzwerkkomponenten in bestehende PRP- bzw. HSR-Kommunikationsnetzwerke stattfinden.

Die oben genannte Aufgabe wird auch durch ein Kommunikationsnetzwerk der eingangs genannten Art gelöst, bei dem das Kommunikationsnetzwerk zumindest zwei Sender-Netzwerkkomponenten umfasst, die während ihres Betriebs hinsichtlich ihres Nutzdateninhaltes identische Datentelegramme an zumindest eine Empfänger-Netzwerkkomponente gemäß einem der Ansprüche 1 bis 3 senden.
Hinsichtlich des erfindungsgemäßen Kommunikationsnetzwerks gelten alle zu der erfindungsgemäßen Empfänger-Netzwerkkomponente voranstehend und nachfolgend gemachten Ausführungen und umgekehrt in entsprechender Weise, insbesondere kann die erfindungsgemäße Empfänger-Netzwerkkomponente in jeder beliebigen Ausführungsform oder eine Kombination beliebiger Ausführungsformen in dem erfindungsgemäßen Kommunikationsnetzwerk betrieben werden. Auch hinsichtlich der Vorteile des erfindungsgemäßen Kommunikationsnetzwerkes wird auf die zu der erfindungsgemäßen Empfänger-Netzwerkkomponente beschriebenen Vorteile verwiesen.

Gemäß einer vorteilhaften Ausführungsform des erfindungsgemäßen Kommunikationsnetzwerks sind die die Sender-Netzwerckomponenten dazu eingerichtet, den von ihnen gesendeten Datentelegrammen Absenderkennzeichnungen hinzuzufügen; die zumindest eine Empfänger-Netzwerkkomponente ist zudem dazu eingerichtet, die Überprüfung des aktuell empfangenen Datentelegramms unter Verwendung der Absenderkennzeichnung durchzuführen.

Um einer Empfänger-Netzwerkkomponente auf besonders einfache Weise eine Information über zusammengehörige Sender-Netzwerkkomponenten zukommen lassen zu können, wird gemäß einer weiteren vorteilhaften Ausführungsform des erfindungsgemäßen Kommunikationsnetzwerks vorgeschlagen, dass zumindest eine der Sender-Netzwerkkomponenten dazu eingerichtet ist, an die zumindest eine Empfänger-Netzwerkkomponente ein Netzwerk-Konfigurationstelegramm zu versenden, das einerseits eine eigene Absenderkennzeichnung und andererseits Absenderkennzeichnungen aller solcher Sender-Netzwerkkomponenten enthält, die während ihres Betriebs hinsichtlich ihres Nutzdateninhaltes identische Datentelegramme wie die zumindest eine Sender-Netzwerkkomponente an die zumindest eine Empfänger-Netzwerkkomponente senden.

Bei dieser Ausführungsform sammelt die zumindest eine Empfänger-Netzwerkkomponente somit zunächst Informationen über alle zu ihr gehörenden, d.h. mit ihr während des Betriebs redundante Datentelegramme versendenden, Sender-Netzwerkkomponenten und sendet diese Informationen dann an die zumindest eine Empfänger-Netzwerkkomponente. Im Rahmen von PRP- bzw. HSR-Kommunikationsnetzwerken kann als Konfigurationstelegramm beispielsweise das ohnehin im Standard vorgesehene "Supervision Frame" verwendet werden, das um ein zusätzliches TLV-Feld (TLV - Type Length Value) erweitert wird, in dem die zu der zumindest einen Sender-Netzwerkkomponente gehörenden anderen Sender-Netzwerkkomponenten angegeben sind.

Gemäß einer weiteren vorteilhaften Ausführungsform des erfindungsgemäßen Kommunikationsnetzwerks ist vorgesehen, dass die Sender-Netzwerkkomponenten dazu eingerichtet sind, den von ihnen versendeten Datentelegrammen zeitlich miteinander synchronisierte Sequenznummern zuzuordnen, und die zumindest eine Empfänger-Netzwerkkomponente dazu eingerichtet ist, die Überprüfung des aktuell empfangenen Datentelegramms unter Verwendung der Sequenznummer durchzuführen.

Außerdem wird es als vorteilhafte Ausführungsform des erfindungsgemäßen Kommunikationsnetzwerks angesehen, wenn das Kommunikationsnetzwerk auch solche Sender-Netzwerkkomponenten umfasst, die selbst Datentelegramme mit identischen Nutzdaten an die zumindest eine Empfänger-Netzwerkkomponente versenden, wobei diese Datentelegramme über unterschiedliche Kommunikationspfade des Kommunikationsnetzwerks an die zumindest eine Empfänger Netzwerkkomponente versendet werden, und wenn die zumindest eine Empfänger-Netzwerkkomponente auch dazu eingerichtet ist, beim Empfangen eines aktuellen Datentelegramms zu überprüfen, ob von derselben Sender-Netzwerkkomponente bereits ein Datentelegramm mit identischen Nutzdaten empfangen worden ist, und ein Datentelegramm mit einem erstmalig empfangenen Nutzdateninhalt weiterzuverarbeiten, und ein Datentelegramm mit solchen Nutzdaten, die bereits in einem früheren Datentelegramm derselben Sender-Netzwerkkomponente empfangen worden sind, als Duplikat zu verwerfen.

Die oben genannte Aufgabe wird schließlich auch durch ein Verfahren zum Betreiben eines Kommunikationsnetzwerks eines Automatisierungssystems mit einer Mehrzahl von Netzwerkkomponenten, die zum Austausch von Datentelegrammen miteinander in Verbindung stehen, wobei der Austausch der Datentelegramme redundant erfolgt, gelöst.

Erfindungsgemäß ist vorgesehen, dass zumindest zwei Sender-Netzwerkkomponenten während ihres Betriebs hinsichtlich ihres Nutzdateninhaltes identische Datentelegramme an zumindest eine Empfänger-Netzwerkkomponente senden, die zumindest eine Empfänger-Netzwerkkomponente beim Empfangen eines aktuellen Datentelegramms von einer der Sender-Netzwerkkomponenten dieses daraufhin überprüft, ob von einer anderen Sender-Netzwerkkomponente bereits ein Datentelegramm mit identischen Nutzdaten empfangen worden ist, und ein Datentelegramm mit einem erstmalig empfangenen Nutzdateninhalt weiterverarbeitet und ein Datentelegramm mit solchen Nutzdaten, die bereits in einem früheren Datentelegramm einer anderen Sender-Netzwerkkomponente empfangen worden sind, als Duplikat verwirft, wobei die Empfänger-Netzwerkkomponente die Überprüfung des aktuell empfangenen Datentelegramms unter Verwendung einer in dem Datentelegramm enthaltenen Absenderkennzeichnung durchführt, wobei die Empfänger-Netzwerkkomponente eine Gruppeninformation über solche Sender-Netzwerkkomponenten umfasst, die während ihres Betriebs hinsichtlich ihres Nutzdateninhaltes identische Datentelegramme an die Empfänger-Netzwerkkomponente senden; und die Empfänger-Netzwerkkomponente die Überprüfung des aktuell empfangenen Datentelegramms unter Verwendung der Absenderkennzeichnung des aktuell empfangenen Datentelegramms und der Absenderkennzeichnungen der in der Gruppeninformation angegebenen Sender-Netzwerkkomponenten durchführt; und wobei die Gruppeninformation Absenderkennzeichnungen von Sender-Netzwerkkomponenten dergestalt enthält, dass eine Absenderkennzeichnung aller derjenigen Sender-Netzwerkkomponenten, die während ihres Betriebs Datentelegramme mit identischem Nutzdateninhalt an die Empfänger-Netzwerkkomponente senden, als Gruppen-Absenderkennzeichnung ausgewählt ist und die Absenderkennzeichnungen aller übrigen zugehörigen Sender-Netzwerkkomponenten der Gruppen-Absenderkennzeichnung zugeordnet werden.

Hinsichtlich des erfindungsgemäßen Verfahrens gelten alle zu der erfindungsgemäßen Empfänger Netzwerkkomponente und dem erfindungsgemäßen Kommunikationsnetzwerk voranstehend und nachfolgend gemachten Ausführungen und umgekehrt in entsprechender Weise, insbesondere sind die erfindungsgemäße Empfänger-Netzwerkkomponente bzw. das erfindungsgemäße Kommunikationsnetzwerk zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Verfahrens wird auf die zu der erfindungsgemäßen Empfänger-Netzwerkkomponente bzw. zu dem erfindungsgemäßen Kommunikationsnetzwerk beschriebenen Vorteile verwiesen.

Hinsichtlich des erfindungsgemäßen Verfahrens kann gemäß einer vorteilhaften Ausführungsform vorgesehen sein, das die Sender-Netzwerkkomponenten den von ihnen gesendeten Datentelegrammen jeweils eine Absenderkennzeichnung hinzufügen, und die zumindest eine Empfänger-Netzwerkkomponente die Überprüfung des aktuell empfangenen Datentelegramms unter Verwendung der Absenderkennzeichnung durchführt.

Eine weitere vorteilhafte Ausführungsform des erfindungsgemäßen Verfahrens sieht zudem vor, dass die Sender-Netzwerckomponenten den von ihnen versendeten Datentelegrammen zeitlich miteinander synchronisierte Sequenznummern zuordnen, und die zumindest eine Empfänger-Netzwerkkomponente die Überprüfung des aktuell empfangenen Datentelegramms unter Verwendung der Sequenznummer durchführt.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Die Erfindung wird im Folgenden anhand von Ausführungsbeispielen näher erläutert. Hierzu zeigen
- Figur 1: eine schematische Darstellung eines einfach aufgebauten Kommunikationsnetzwerks mit zwei geräteredundanten Sender-Netzwerkkomponenten und einer Empfänger-Netzwerkkomponente;
- Figur 2: eine beispielhafte schematische Darstellung eines PRP-Kommunikationsnetzwerks mit geräteredundanten Sender-Netzwerkkomponenten; und
- Figur 3: eine beispielhafte schematische Darstellung eines HSR-Kommunikationsnetzwerks mit geräteredundanten Sender-Netzwerckomponenten.

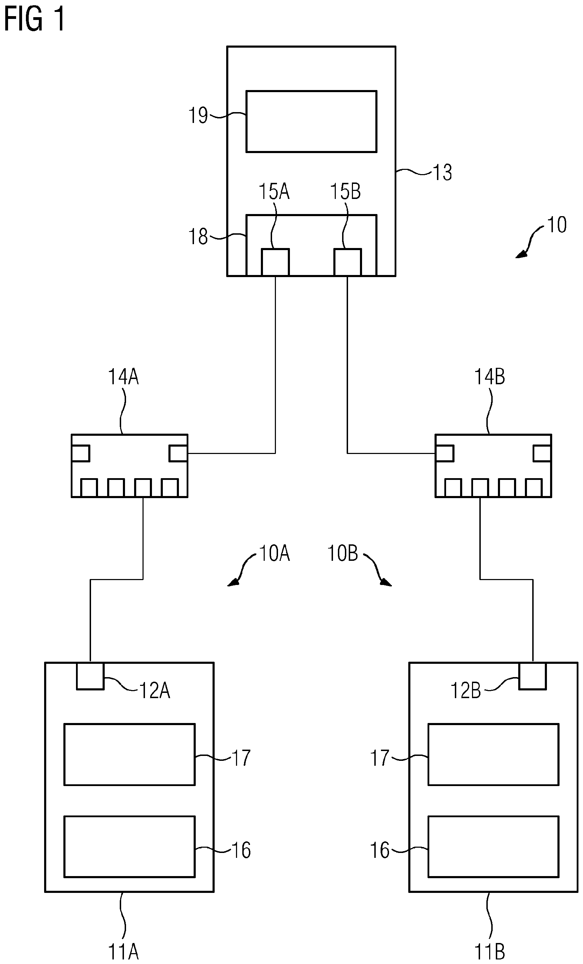

Figur 1 zeigt in höchstschematischer Darstellung ein Ausführungsbeispiel eines sehr einfach aufgebauten Kommunikationsnetzwerks 10. Das Kommunikationsnetzwerk 10 besteht gemäß dem gezeigten Ausführungsbeispiel aus zwei Teilnetzwerken 10A und 10B, über die von zwei Sender-Netzwerkkomponenten 11A, 11B Datentelegramme in redundanter Weise an eine Empfänger-Netzwerkkomponente 13 übertragen werden können. Dazu sind die Teilnetzwerke 10A und 10B redundant zueinander aufgebaut und weisen neben Kommunikationsleitungen auch Switche 14A und 14B auf. Die Switche 14A und 14B dienen zur korrekten Weiterleitung der Datentelegramme von den Sender-Netzwerkkomponenten 11A, 11B an die Empfänger-Netzwerkkomponente 13. Neben dem gezeigten Aufbau des Kommunikationsnetzwerks 10 können selbstverständlich auch andere Netzwerktopologien zur Anwendung kommen, beispielsweise kann das Kommunikationsnetzwerk 10 einen ringförmigen Aufbau besitzen und/oder es können mehrere Sender- und Empfänger-Netzwerkkomponenten vorhanden sein.

Die Sender-Netzwerkkomponenten 11A, 11B sind geräteredundant ausgebildet, d.h. sie generieren während ihres Betriebs Datentelegramme mit identischem Nutzdateninhalt und versenden diese an die Empfänger-Netzwerkkomponente 13. In dem in Figur 1 gezeigten Ausführungsbeispiel weist jede der beiden Sender-Netzwerkkomponenten 11A, 11B genau einen Port, also eine Netzwerkschnittstelle, auf, über den sie mit einem der Teilnetzwerke 10A oder 10B verbunden ist. Konkret ist die Sender-Netzwerkkomponente 11A mit ihrem Port 12A mit dem Switch 14A des einen Teilnetzwerks 10A verbunden, während die Sender-Netzwerkkomponente 11B es ihrem Port 12B mit dem Switch 14B des zweiten Teilnetzwerks 10B verbunden ist. In einer anderen, in Figur 1 nicht gezeigten, Ausführungsform, kann jede der Sender-Netzwerkkomponenten 11A, 11B auch jeweils zwei Ports aufweisen, über die sie mit beiden Teilnetzwerken verbunden ist. Außerdem können abweichend von der Darstellung der Figur 1 auch mehr als zwei geräteredundante Sender-Netzwerkkomponenten vorgesehen sein.

Die beiden geräteredundanten Sender-Netzwerkkomponenten 11A, 11B führen während ihres Betriebs identische oder zumindest hinreichend ähnliche Funktionen aus, z.B. nehmen sie Messwerte über nicht näher dargestellte Sensoren auf oder erfassen bestimmte Ereignisse eines nicht näher dargestellten Prozesses. Bei den Sender-Netzwerkkomponenten 11A, 11B kann es sich in diesem Zusammenhang beispielsweise um Messgeräte, Remote Terminal Units oder Merging Units eines Automatisierungssystems (z.B. zur Automatisierung von Energieversorgungsnetzen oder einer HGÜ-Übertragungsanlage) handeln. Zu diesem Zweck führen die Sender-Netzwerkkomponenten 11A, 11B entsprechende Applikationen 16 aus, die beispielsweise in Form einer Gerätesoftware oder einer speziellen Gerätehardware oder einer Kombination aus beidem ausgestaltet sein kann. Die Ergebnisse der Ausführung der jeweiligen Applikation 16 können dabei zum Versand an die Empfänger-Netzwerkkomponente 13 vorgesehen sein. Dabei wird vorausgesetzt, dass die Sender-Netzwerkkomponenten 11A, 11B durch die Ausführung identischer oder zumindest hinreichend ähnlicher Funktionen identische Ergebnisse (z.B. identische Messwerte) generieren.

Die Applikation 16 jeder Sender-Netzwerkkomponente 11A, 11B übergibt die Ergebnisse an eine Kommunikationseinrichtung 17 der jeweiligen Sender-Netzwerkkomponente 11A, 11B. Die jeweilige Kommunikationseinrichtung 17 verwendet die Ergebnisse zur Erzeugung von Datentelegrammen, wobei die Ergebnisse als Nutzdaten der Datentelegramme vorgesehen werden. Jede der beiden Sender-Netzwerkkomponenten 11A, 11B versendet daraufhin Datentelegramme mit identischem Nutzdateninhalt, wobei die Sender-Netzwerkkomponente 11A ein Datentelegramm über das Teilnetzwerk 10A an die Empfänger-Netzwerkkomponente 13 sendet und die Sender-Netzwerkkomponente 11B ein Datentelegramm über das Teilnetzwerk 10B an die Empfänger-Netzwerkkomponente 13 sendet, so dass letztlich zwei Datentelegramme mit identischem Nutzdateninhalt an die Empfänger-Netzwerkkomponente 13 versendet werden. Während der Nutzdateninhalt der Datentelegramme identisch sein muss, um tatsächlich redundante Informationen zu übertragen, dürfen hinsichtlich des Datenformates durchaus Unterschiede bestehen.

Die Empfänger-Netzwerkkomponente 13 überprüft beim Empfang jedes Datentelegramms, ob bereits ein hinsichtlich der Nutzdaten identisches Datentelegramm einer anderen Sender-Netzwerkkomponente empfangen worden ist. Dazu weist die Empfänger-Netzwerkkomponente 13 zwei Ports 15A, 15B auf, mit denen sie mit den beiden Teilnetzwerken 10A und 10B in Verbindung steht. In einer alternativen - in Figur 1 nicht dargestellten - Ausführungsform kann die Empfänger-Netzwerkkomponente auch lediglich einen Port aufweisen, der in geeigneter Weise zum Empfang von Datentelegrammen aus beiden Teilnetzwerken eingerichtet ist. Außerdem umfasst die Empfänger-Netzwerkkomponente 13 einen Duplikatefilter 18, mit dem die Überprüfung der Datentelegramme durchgeführt wird. Der Duplikatefilter 18 kann hierbei beispielsweise in Form eines hardwareprogrammierten Schaltungsbausteins (z.B. ASCI, FPGA) oder als Softwaremodul einer Gerätesoftware oder als eine Kombination aus Hardware und Software ausgebildet sein.

Ergibt die Überprüfung eines aktuell empfangenen Datentelegramms durch den Duplikatefilter 18, dass noch kein hinsichtlich seiner Nutzdaten identisches Datentelegramm einer anderen Sender-Netzwerkkomponente empfangen worden ist, wird das aktuell empfangene Datentelegramm bzw. sein Nutzdateninhalt an eine auf der Empfänger-Netzwerkkomponente 13 ablaufende Applikation 19, z.B. eine Steuerungs-, Analyse- oder Monitoringsoftware, zur Verarbeitung weitergegeben. Ergibt die Überprüfung hingegen, dass bereits ein Datentelegramm mit identischen Nutzdaten empfangen worden ist, so wird das aktuell empfangene Datentelegramm vom Duplikatefilter 18 als Duplikat verworfen und entsprechend nicht an die Applikation 19 weitergeleitet, um eine mehrfache Verarbeitung derselben Nutzdaten zu vermeiden.

Der Duplikatefilter 18 muss hierbei dazu ausgebildet sein, Duplikate solcher Datentelegramme zu erkennen, die von unterschiedlichen Sender-Netzwerkkomponenten 11A, 11B versendet worden sind.

Der Duplikatefilter kann im einfachsten Fall eine inhaltliche Analyse der Nutzdaten der jeweiligen Datentelegramme vornehmen, um Duplikate zu erkennen. Diese Vorgehensweise benötigt keine weiteren Informationen, ist aber vergleichsweise aufwendig und benötigt damit auch relativ viel Zeit zu ihrer Durchführung. Daher bietet es sich an, zur Erkennung von Duplikaten auf andere Kriterien zurückzugreifen.

Als ein mögliches Kriterium zur Erkennung von Duplikaten kann der Duplikatefilter beispielsweise Absenderkennzeichnungen verwenden, die die Sender-Netzwerkkomponenten 11A, 11B den jeweiligen Datentelegrammen beifügen. Die Absenderkennzeichnung gibt hierbei die jeweilige Sender-Netzwerkkomponente unverwechselbar an. Beispielsweise kann eine MAC-Adresse der jeweiligen Sender-Netzwerkkomponente als Absenderkennzeichnung verwendet werden. In diesem Fall muss der Duplikatefilter Kenntnis darüber besitzen, welche Sender-Netzwerkkomponenten überhaupt geräteredundant ausgebildet sind, d.h. von welchen Sender-Netzwerkkomponenten er hinsichtlich der Nutzdaten inhaltsidentische Datentelegramme erwarten kann. Dazu kann die Empfänger-Netzwerkkomponente beispielsweise eine Gruppeninformation umfassen, die solche geräteredundanten Sender-Netzwerkkomponenten angibt.

Dabei kann eine solche Gruppeninformation beispielsweise die jeweilige Sender-Netzwerkkomponente anhand einer Serien- oder Gerätenummer, anhand eines geografischen Standorts oder einer anderen für die jeweilige Sender-Netzwerkkomponente charakteristischen Bezeichnung angeben. In diesem Fall müsste der Duplikatefilter die Absenderkennzeichnungen der in der Gruppeninformation auf diese Weise angegebenen Sender-Netzwerckomponenten ermitteln und zur Duplikateerkennung verwenden. Als besonders vorteilhaft wird es jedoch angesehen, wenn die Gruppeninformation die jeweils zugehörigen Sender-Netzwerckomponenten gleich anhand ihrer jeweiligen Absenderkennzeichnung angibt. Zur praktischen Handhabung kann die Gruppeninformation beispielsweise die Absenderkennzeichnung einer der zusammengehörenden geräteredundanten Sender-Netzwerkkomponenten als Gruppen-Absenderkennzeichnung auswählen und die Absenderkennzeichnungen der übrigen Sender-Netzwerkkomponenten dieser Gruppe dieser Gruppen-Absenderkennzeichnung zuordnen. Dies kann beispielsweise in Form einer Tabelle erfolgen. Ein Beispiel einer solchen Tabelle, in der die beiden Sender-Netzwerkkomponenten 11A und 11B der Figur 1 als zusammengehörende geräteredundante Sender-Netzwerkkomponenten eingetragen sind, ist nachfolgend in Tabelle 1 gezeigt.

**Tabelle 1**

| Gruppenabsenderkennzeichnung | individuelle Absenderkennzeichnung |
|---|---|
| MAC-Adresse Sender-NK 11A | MAC-Adresse Sender-NK 11A |
| MAC-Adresse Sender-NK 11A | MAC-Adresse Sender-NK 11B |

Wie man aus Tabelle 1 entnehmen kann, ist die Absenderkennzeichnung der Sender-Netzwerkkomponente 11A (in der Tabelle 1 abgekürzt als "Sender-NK") als Gruppen-Absenderkennzeichnung ausgewählt worden. Die individuellen Absenderkennzeichnungen der beiden Sender-Netzwerkkomponenten 11A und 11B sind jeweils der Gruppen-Absenderkennzeichnung zugeordnet. Als Absenderkennzeichnungen werden beispielhaft die jeweiligen MAC-Adressen der Sender-Netzwerkkomponenten 11A und 11B verwendet.

Bei der Prüfung auf Duplikate prüft der Duplikatefilter 18 ein aktuell empfangenes Datentelegramm, indem er daraus die Absenderkennzeichnung (die üblicherweise als Bestandteil des sogenannten Telegramm-Headers eingetragen ist) entnimmt und anhand der Gruppeninformation der entnommenen individuellen Absenderkennzeichnung die zugehörige Gruppen-Absenderkennzeichnung zuordnet. Die Gruppen-Absenderkennzeichnung wird fortan für die weitere Prüfung anstelle der individuellen Absenderkennzeichnung verwendet. Erkennt der Duplikatefilter, dass bereits zuvor ein Datentelegramm mit derselben Gruppen-Absenderkennzeichnung empfangen worden ist, wird das aktuell empfangene Datentelegramm als Duplikat verworfen. Bei erstmaligem Empfang eines Datentelegramms mit dieser Gruppen-Absenderkennzeichnung wird dieses hingegen weiterverarbeitet und beispielsweise sein Inhalt an die Applikation 19 weitergeleitet.

Anstelle einer Tabellenform wie in Tabelle 1 angegeben kann die Gruppeninformation auch beliebige anders ausgebildet sein, beispielsweise als Textdatei oder als Tabelle in anderer Formatierung. Wichtig ist dabei lediglich, dass eine logische ODER-Verknüpfung zwischen allen individuellen Absenderkennzeichnungen der zusammengehörenden Sender-Netzwerkkomponenten hergestellt wird. Dies kann beispielsweise auch durch bloße durch ein logisches ODER verknüpfte Aneinanderreihung der jeweiligen Absenderkennzeichnungen erfolgen, ohne dass eine Gruppen-Absenderkennzeichnung ausgewählt wird.

Um nicht nach erstmaligem Empfang eines Datentelegramms mit einer bestimmten Gruppen-Absenderkennzeichnung ohne Begrenzung alle weiteren Datentelegramme mit derselben Absenderkennzeichnung als Duplikate zu verwerfen, kann der Duplikatefilter beispielsweise dazu eingerichtet sein, nach erstmaligem Empfang eines Datentelegramms einen Zeitgeber zu starten und nur solche Datentelegramme mit identischer Gruppen-Absenderkennzeichnung als Duplikate zu verwerfen, die innerhalb eines vorgegebenen Zeitbereichs nach Empfang des ersten Datentelegramms empfangen werden. Gibt der Zeitgeber einen Ablauf des vorgegebenen Zeitbereichs an, so wird ein weiteres Datentelegramm mit derselben Gruppen-Absenderkennzeichnung erneut als erstes Datentelegramm akzeptiert und der Zeitgeber wieder gestartet. Der Zeitbereich kann hierbei beispielsweise seitens eines Betreibers der Netzwerkkomponenten als Parameter festgelegt werden und in Abhängigkeit von der Häufigkeit der versendeten Datentelegramme, vom üblichen zeitlichen Abstand zwischen zwei aufeinanderfolgenden Datentelegrammen sowie der Übertragungszeit im Kommunikationsnetzwerk sowie der Varianz dieser Übertragungszeit gewählt werden.

Die Gruppeninformation kann beispielsweise vom Betreiber des Kommunikationsnetzwerks manuell erzeugt und in der Empfänger-Netzwerkkomponente hinterlegt werden. Alternativ dazu kann jedoch auch vorgesehen sein, dass die Information über die zusammengehörenden Sender-Netzwerkkomponenten von den Sender-Netzwerkkomponenten selbst an die Empfänger-Netzwerkkomponente übermittelt wird. Hierzu versendet mindestens eine Sender-Netzwerkkomponente einer Gruppe von zueinander geräteredundant aufgebauten Sender-Netzwerkkomponenten ein Netzwerk-Konfigurationstelegramm an die Empfänger-Netzwerkkomponente. Dieses Netzwerk-Konfigurationstelegramm enthält eine Angabe über alle diejenigen Sender-Netzwerkkomponenten, die gemeinsam mit der das Netzwerk-Konfigurationstelegramm versendenden Sender-Netzwerkkomponente eine Gruppe geräteredundanter Sender-Netzwerkkomponenten bilden. Beispielsweise kann in dem Netzwerk-Konfigurationstelegramm enthaltene Angabe die Absenderkennzeichnungen aller übrigen zur jeweiligen Gruppe gehörenden Sender-Netzwerkkomponenten enthalten. Das Netzwerk-Konfigurationstelegramm kann von einer ausgewählten Sender-Netzwerkkomponente der Gruppe oder von allen Sender-Netzwerckomponenten der Gruppe an die Empfänger-Netzwerkkomponente versendet werden. Die Empfänger-Netzwerkkomponente kann anhand des mindestens einen empfangenen Netzwerk-Konfigurationstelegramms die Gruppeninformation erzeugen. Als Netzwerk-Konfigurationstelegramm kann beispielsweise ein im Rahmen des PRP- bzw. HSR-Standards ohnehin zu versendendes "Supervisionframe" verwendet werden, das um den benötigten Inhalt erweitert worden ist.

Als ein anderes Kriterium kann alternativ oder zusätzlich zur Betrachtung der Absenderkennzeichnung auch eine in dem jeweiligen Datentelegramm enthaltene Sequenznummer verwendet werden. Als Sequenznummer kann die jeweilige Sender-Netzwerckomponente beispielsweise eine fortlaufende Nummerierung der Datentelegramme gemäß der Reihenfolge ihres Versendens verwenden. Ein Datentelegramm mit einer höheren Sequenznummer wurde demnach später als ein Datentelegramm mit einer niedrigeren Sequenznummer versendet. Um mit ansteigender Anzahl versendeter Datentelegramme den für die Sequenznummer verwendeten Datenbereich im Datentelegramm nicht ausufern zu lassen, wird die maximale Länge einer Sequenznummer üblicherweise zuvor festgelegt. Beispielsweise besitzt der in einem PRP- bzw. HSR-konformen Datentelegramm für die Sequenznummer reservierte Bereich eine Länge von zwei Byte, die somit einen Sequenznummernbereich von 0...65525 zulassen. Beispielsweise kann seitens des Betreibers in den Sender-Netzwerkkomponenten eine maximale Sequenznummernlänge von 50000 (Nummernbereich 0...49999) vorgegeben werden. Beim Versand von Datentelegrammen im Abstand von 20ps wiederholt sich die Sequenznummer in diesem Fall jede Sekunde, werden beispielsweise nur alle 50µs Datentelegramme versendet, wiederholt sich die Sequenznummer erst nach 2,5s. Im Duplikatefilter 18 muss hierfür entsprechend der Sequenznummernbereich und der Zeitbereich bis zur Wiederholung der Sequenznummer (oder alternativ die Sendefrequenz der Datentelegramme) hinterlegt sein.

Die Sender-Netzwerkkomponenten müssen bei Heranziehung des Kriteriums der Sequenznummer dazu ausgebildet sein, möglichst gleichzeitig Datentelegramme mit identischer Sequenznummer zu versenden. Dazu können die geräteredundanten Sender-Netzwerckomponenten mittels gängiger Zeitsynchronisierverfahren (z.B. Nutzung des lpps-Impulses aus dem GPS-Signal oder Synchronisierung gemäß IEEE 1588) aufeinander synchronisiert werden, so dass sie Datentelegramme mit identischem Nutzdateninhalt zeitlich synchron mit derselben Sequenznummer aussenden. Alternativ kann aber auch im Duplikatefilter 18 ein "Unschärfebereich" festgelegt sein, innerhalb dessen die Sequenznummern der Datentelegramme liegen müssen, um noch als Duplikate erkannt zu werden. Beispielsweise kann in dieser Weise der Wert der Sequenznummer des zuerst empfangenen Datentelegramms +/- 10 als identischer Sequenznummernwert akzeptiert werden.

Bei der Prüfung auf Duplikate anhand der Sequenznummer prüft der Duplikatefilter 18 ein aktuell empfangenes Datentelegramm, indem er daraus die Sequenznummer (die üblicherweise als Bestandteil des Telegramm-Headers eingetragen ist) entnimmt und prüft, ob bereits von einer anderen Sender-Netzwerkkomponente ein Datentelegramm mit derselben (oder nahezu derselben) Sequenznummer empfangen worden ist. Ist dies der Fall, wird das aktuell empfangene Datentelegramm als Duplikat verworfen. Bei erstmaligem Empfang eines Datentelegramms mit dieser Sequenznummer wird dieses hingegen weiterverarbeitet und beispielsweise sein Inhalt an die Applikation 19 weitergeleitet.

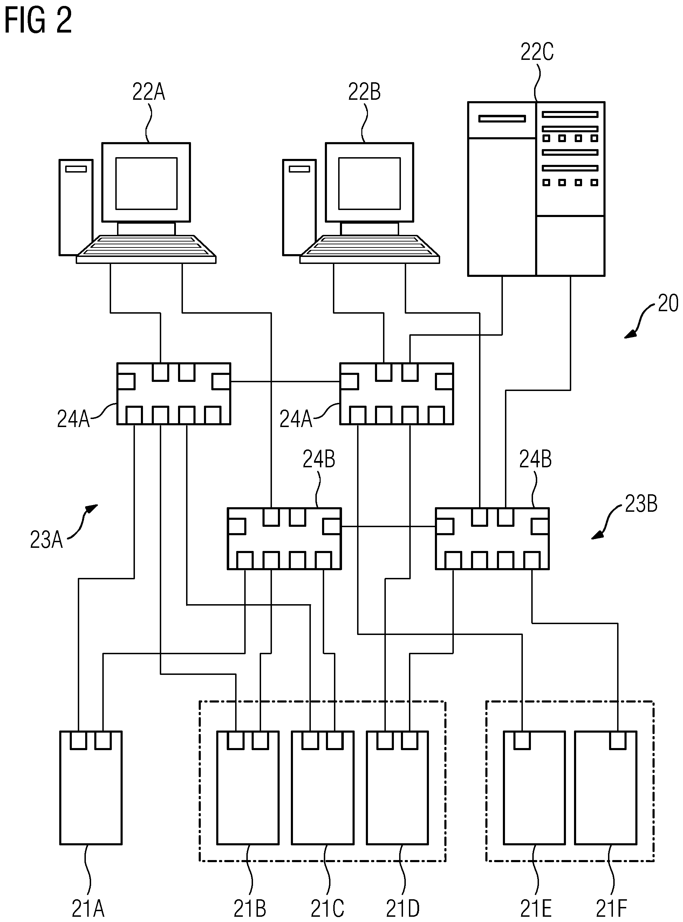

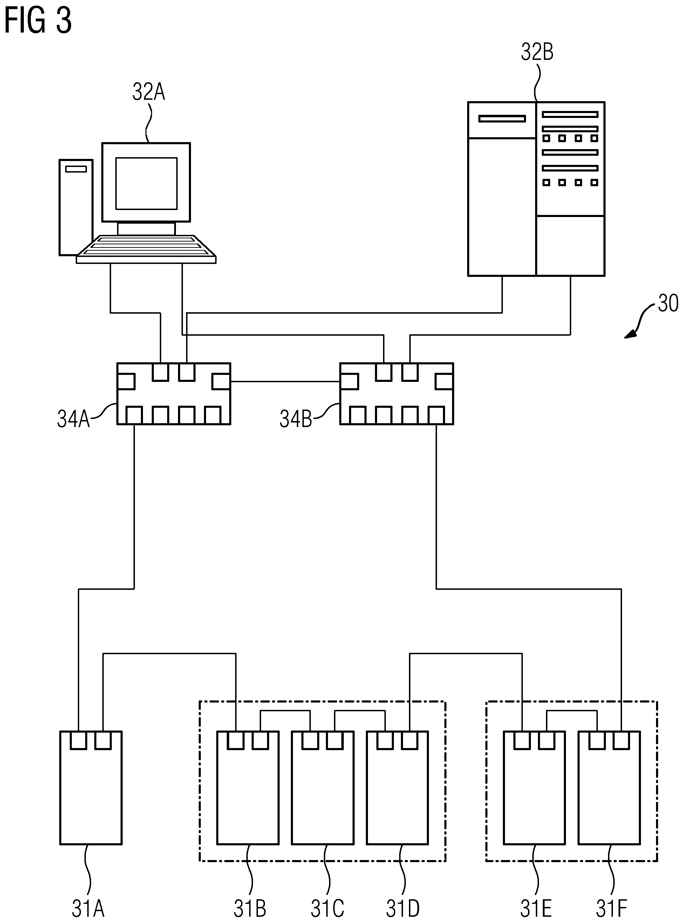

Als besonders vorteilhaft wird die Kombination beider beschriebener Kriterien zur Erkennung von Duplikaten angesehen. In diesem Fall prüft der Duplikatefilter beim Empfang eines aktuellen Datentelegramms einerseits anhand der Absenderkennzeichnung, ob bereits ein Datentelegramm von einer der geräteredundanten Sender-Netzwerkkomponenten 11A, 11B empfangen worden ist, und andererseits anhand der Sequenznummer, ob bereits ein Datentelegramm derselben (oder nahezu derselben) Sequenznummer empfangen worden ist. Fällt die Prüfung in beiden Fällen positiv aus, wurde bereits ein nutzdateninhaltsgleiches Datentelegramm einer der geräteredundanten Sender-Netzwerkkomponenten mit (hinreichend) übereinstimmender Sequenznummer empfangen, so dass das aktuell empfangene Datentelegramm als Duplikat verworfen wird. Andernfalls wird es als erstmalig eingehendes Datentelegramm akzeptiert und weiterverarbeitet.
Die Verwendung beider Kriterien zur Erkennung von Duplikaten eignet sich insbesondere auch dann, wenn die geräteredundanten Sender-Netzwerkkomponenten in einem herkömmlichen PRP- bzw. HSR-Kommunikationsnetz betrieben werden sollen, die auch solche Sender-Netzwerkkomponenten umfassen, die nicht geräteredundant ausgebildet sind. In solchen Kommunikationsnetzwerken findet nämlich eine Duplikateerkennung wie eingangs beschrieben hinsichtlich solcher Datentelegramme, die von derselben Sender-Netzwerkkomponente über unterschiedliche Kommunikationspfade zur Empfänger-Netzwerkkomponente übertragen werden, anhand der Absenderkennzeichnung dieser einen Sender-Netzwerkkomponente und der Sequenznummer statt. Zum Betrieb eines "gemischten" PRP- bzw. HSR-Kommunikationsnetzwerkes muss folglich lediglich der Duplikatefilter dazu ertüchtigt werden, neben der Erkennung von Duplikaten, die von derselben Sender-Netzwerkkomponente stammen, auch eine Erkennung von Duplikaten durchführen zu können, die von unterschiedlichen Sender-Netzwerkkomponenten versendet worden sind. Dieser "gemischte" Betrieb wird nachfolgend anhand der Figuren 2 und 3 kurz erläutert.

Figur 2 zeigt beispielhaft den Aufbau eines gemischten Kommunikationsnetzwerks 20, das nach dem Standard IEC 62439-3:2012 (PRP) ausgebildet ist. Das Kommunikationsnetzwerk 20 dient zur redundanten Verbindung von Sender-Netzwerkkomponenten 21A-21F mit Empfänger-Netzwerkkomponenten 22A-22C. Dabei versenden die Sender-Netzwerkkomponenten 21A-F während ihres Betriebes Datentelegramme an eine, mehrere oder alle der Empfänger-Netzwerkkomponenten 22A-C.

Um eine redundante und störfeste Übertragung der Datentelegramme zwischen den Netzwerkkomponenten 21A-F zu gewährleisten, weist das Kommunikationsnetzwerk 20 zwei voneinander unabhängige Teilnetzwerke 23A und 23B auf, die parallel betrieben werden. Die beiden Teilnetzwerke 23A und 23B stimmen hinsichtlich ihrer verwendeten Kommunikationsprotokolle auf der MAC-LLC Ebene (MAC = Media Access Control - Medienzugangssteuerung; LLC = Logical Link Control - Logische Verbindungssteuerung) überein, können sich aber hinsichtlich ihrer Leistungsfähigkeit und ihrer Topologie durchaus unterscheiden. Zwischen den beiden Teilnetzwerken 23A und 23B besteht keine direkte Verbindung, so dass Datentelegramme aus dem ersten Teilnetzwerk 23A nicht in das andere Teilnetzwerk 23B und umgekehrt gelangen können. Die Teilnetzwerke 23A und 23B weisen zur korrekten Weiterleitung der Datentelegramme eingerichtete Switche auf, konkret umfasst das Teilnetzwerk 23A Switche 24A, während das Teilnetzwerk 23B Switche 24B umfasst.

Die Sender-Netzwerkkomponente 21A besitzt keine andere geräteredundante Sender-Netzwerkkomponente und ist dazu eingerichtet, gemäß dem PRP-Standard Datentelegramme an zumindest eine der Empfänger-Netzwerkkomponenten 22A-C zu versenden. Dazu weist sie zwei Ports auf, wobei sie über je einen Port mit je einem der Teilnetzwerke 23A, 23B verbunden ist. Die Sender-Netzwerkkomponente 21A sendet während ihres Betriebs Datentelegramme mit identischem Nutzdateninhalt unter Verwendung identischer Absenderkennzeichnungen und Sequenznummern an die zumindest eine Empfänger-Netzwerkkomponente 22A-C. Die jeweilige Empfänger-Netzwerkkomponente weist einen Duplikatefilter auf, der ein Duplikat eines bereits empfangenen Datentelegramms anhand der übereinstimmenden Absenderkennzeichnung und der übereinstimmenden Sequenznummer erkennt und daher verwirft.

Die Sender-Netzwerkkomponenten 21B-D sind zueinander geräteredundant ausgebildet. Die Sender-Netzwerkkomponenten 21B-D sind wie die Sender-Netzwerkkomponente 21A über jeweils einen Port mit dem Teilnetzwerk 23A und über jeweils einen anderen Port mit dem Teilnetzwerk 23B verbunden. Die Sender-Netzwerckomponenten 21B-D senden während ihres Betriebs Datentelegramme mit identischem Nutzdateninhalt unter Verwendung jeweils individueller Absenderkennzeichnungen und identischer Sequenznummern an die zumindest eine Empfänger-Netzwerckomponente 22A-C. Im Kommunikationsnetzwerk 20 befinden sich daher gleichzeitig immer sechs redundante Datentelegramme der Sender-Netzwerkkomponenten 21B-D, von denen fünf als Duplikate herausgefiltert werden müssen. Jeweils zwei der sechs Datentelegramme weisen hierbei identische Absenderkennzeichnungen auf.

Zur Vergabe der identischen Sequenznummern sind die Sender-Netzwerkkomponenten 21B-D untereinander zeitsynchronisiert. Die Zusammengehörigkeit der Sender-Netzwerkkomponenten 21B-D ist in der jeweiligen Empfänger-Netzwerkkomponente in Form einer Gruppeninformation wie oben beschrieben hinterlegt. Als Gruppen-Absenderkennzeichnung sei beispielhaft die Absenderkennzeichnung der Sender-Netzwerkkomponente 21B ausgewählt. Die entsprechende Gruppeninformation kann beispielsweise wie in Tabelle 2 dargestellt ausgebildet sein.

**Tabelle 2**

| Gruppenabsenderkennzeichnung | individuelle Absenderkennzeichnung |
|---|---|
| MAC-Adresse Sender-NK 21B | MAC-Adresse Sender-NK 21B |
| MAC-Adresse Sender-NK 21B | MAC-Adresse Sender-NK 21C |
| MAC-Adresse Sender-NK 21B | MAC-Adresse Sender-NK 21D |

Der Duplikatefilter der jeweiligen Empfänger-Netzwerckomponente 22A-C erkennt ein Duplikat eines bereits empfangenen Datentelegramms anhand der übereinstimmenden Gruppen-Absenderkennzeichnung und der übereinstimmenden Sequenznummer und verwirft es entsprechend.

Die Sender-Netzwerkkomponenten 21E-F sind ebenfalls zueinander geräteredundant ausgebildet. Allerdings weisen die Sender-Netzwerkkomponenten 21E-F jeweils nur einen Port auf. Um eine redundante Übertragung der Datentelegramme zu gewährleisten, ist die Sender-Netzwerkkomponente 21E über ihren Port mit dem Teilnetzwerk 23A und die Sender-Netzwerkkomponente 21F über ihren Port mit dem Teilnetzwerk 23B verbunden. Die Sender-Netzwerkkomponenten 21E-F senden während ihres Betriebs Datentelegramme mit identischem Nutzdateninhalt unter Verwendung jeweils individueller Absenderkennzeichnungen und identischer Sequenznummern an die zumindest eine Empfänger-Netzwerkkomponente 22A-C. Im Kommunikationsnetzwerk 20 befinden sich daher gleichzeitig immer zwei redundante Datentelegramme der Sender-Netzwerkkomponenten 21E-F, von denen eines als Duplikat herausgefiltert werden muss. Die Datentelegramme weisen hierbei unterschiedliche Absenderkennzeichnungen auf.

Zur Vergabe der identischen Sequenznummern sind die Sender-Netzwerkkomponenten 21E-F untereinander zeitsynchronisiert. Die Zusammengehörigkeit der Sender-Netzwerkkomponenten 21E-F ist in der jeweiligen Empfänger-Netzwerkkomponente in Form einer Gruppeninformation wie oben beschrieben hinterlegt. Als Gruppen-Absenderkennzeichnung sei beispielhaft die Absenderkennzeichnung der Sender-Netzwerkkomponente 21E ausgewählt. Die entsprechende Gruppeninformation kann beispielsweise wie in Tabelle 3 dargestellt ausgebildet sein.

**Tabelle 3**

| Gruppenabsenderkennzeichnung | individuelle Absenderkennzeichnung |
|---|---|
| MAC-Adresse Sender-NK 21E | MAC-Adresse Sender-NK 21E |
| MAC-Adresse Sender-NK 21E | MAC-Adresse Sender-NK 21F |

Der Duplikatefilter der jeweiligen Empfänger-Netzwerkkomponente 22A-C erkennt ein Duplikat eines bereits empfangenen Datentelegramms anhand der übereinstimmenden Gruppen-Absenderkennzeichnung und der übereinstimmenden Sequenznummer und verwirft es.

Um einen reibungslosen Betrieb sowohl der einzelnen Sender-Netzwerkkomponente 21A als auch der geräteredundanten Sender-Netzwerkkomponenten 21B-F zu gewährleisten, kann auch für die einzelne Sender-Netzwerkkomponente 21A eine Gruppeninformation vorliegen, in der diese als einziges Gruppenmitglied eingetragen ist, wobei ihre Absenderkennzeichnung mit der Gruppen-Absenderkennzeichnung übereinstimmt. Der Duplikatefilter kann dann die Überprüfung auf Duplikate allein anhand der jeweiligen Gruppeninformation durchführen.

Die Gruppeninformation kann wie hinsichtlich Figur 2 beispielhaft erläutert für jede einzelne Gruppe von Sender-Netzwerkkomponenten separat vorliegen. Alternativ kann aber auch eine einzige Gruppeninformation gebildet werden, die eine Information über alle vorhandenen Sender-Netzwerkkomponenten 21A-F im Kommunikationsnetzwerk 20 umfasst. Eine solche Gruppeninformation kann beispielsweise wie in Tabelle 4 dargestellt ausgebildet sein.

**Tabelle 4**

| Gruppenabsenderkennzeichnung | individuelle Absenderkennzeichnung |
|---|---|
| MAC-Adresse Sender-NK 21A | MAC-Adresse Sender-NK 21A |
| MAC-Adresse Sender-NK 21B | MAC-Adresse Sender-NK 21B |
| MAC-Adresse Sender-NK 21B | MAC-Adresse Sender-NK 21C |
| MAC-Adresse Sender-NK 21B | MAC-Adresse Sender-NK 21D |
| MAC-Adresse Sender-NK 21E | MAC-Adresse Sender-NK 21E |
| MAC-Adresse Sender-NK 21E | MAC-Adresse Sender-NK 21F |

Figur 3 zeigt schließlich beispielhaft den Aufbau eines gemischten Kommunikationsnetzwerks 30, das nach dem Standard IEC 62439-3:2012 (HSR) als ringförmiges Kommunikationsnetzwerk ausgebildet ist. Das Kommunikationsnetzwerk 30 dient zur redundanten Verbindung von Sender-Netzwerkkomponenten 31A-31F mit Empfänger-Netzwerkkomponenten 32A-B. Dabei versenden die Sender-Netzwerkkomponenten 31A-F während ihres Betriebes Datentelegramme an eine, mehrere oder alle der Empfänger-Netzwerkkomponenten 32A-B.

Um eine redundante und störfeste Übertragung der Datentelegramme zwischen den Netzwerkkomponenten 31A-F zu gewährleisten, weist das Kommunikationsnetzwerk 30 durch seine Ringstruktur zwei voneinander unabhängige Netzwerkpfade, nämlich, von der jeweiligen Sender-Netzwerkkomponente 31A-F aus gesehen, einmal einen Übertragungspfad im Uhrzeigersinn und einmal einen Übertragungspfad gegen den Uhrzeigersinn auf. Die Sender-Netzwerkkomponenten 31A-F weisen jeweils zwei Ports auf, wobei jeweils einer der Ports mit dem Port seines Nachbargerätes verbunden ist. Zur Anbindung der Empfänger-Netzwerkkomponenten 32A-B an das Kommunikationsnetzwerk 30 sind Switche 34A-B vorgesehen. Eine Netzwerkkomponente, die ein nicht an sie gerichtetes Datentelegramm empfängt, leitet dieses - unter Beibehaltung der generellen Übertragungsrichtung - direkt an ihren jeweils anderen Port weiter.

Die Sender-Netzwerkkomponente 31A besitzt keine andere geräteredundante Sender-Netzwerkkomponente und ist dazu eingerichtet, gemäß dem HSR-Standard Datentelegramme an zumindest eine der Empfänger-Netzwerkkomponenten 32A-B zu versenden. Die Sender-Netzwerkkomponente 31A sendet während ihres Betriebs über beide Ports in unterschiedliche Übertragungsrichtungen Datentelegramme mit identischem Nutzdateninhalt unter Verwendung identischer Absenderkennzeichnungen und Sequenznummern an die zumindest eine Empfänger-Netzwerkkomponente 32A-B. Die jeweilige Empfänger-Netzwerkkomponente weist einen Duplikatefilter auf, der ein Duplikat eines bereits empfangenen Datentelegramms anhand der übereinstimmenden Absenderkennzeichnung und der übereinstimmenden Sequenznummer erkennt und daher verwirft.

Die Sender-Netzwerkkomponenten 31B-D sind zueinander geräteredundant ausgebildet. Die Sender-Netzwerkkomponenten 31B-D senden während ihres Betriebs über beide Ports in unterschiedliche Übertragungsrichtungen Datentelegramme mit identischem Nutzdateninhalt unter Verwendung jeweils individueller Absenderkennzeichnungen und identischer Sequenznummern an die zumindest eine Empfänger-Netzwerkkomponente 32A-B. Im Kommunikationsnetzwerk 30 befinden sich daher gleichzeitig immer sechs redundante Datentelegramme der Sender-Netzwerkkomponenten 31B-D, von denen fünf als Duplikate herausgefiltert werden müssen. Jeweils zwei der sechs Datentelegramme weisen hierbei identische Absenderkennzeichnungen auf.

Zur Vergabe der identischen Sequenznummern sind die Sender-Netzwerkkomponenten 31B-D untereinander zeitsynchronisiert. Die Zusammengehörigkeit der Sender-Netzwerkkomponenten 31B-D ist in der jeweiligen Empfänger-Netzwerkkomponente in Form einer Gruppeninformation wie oben beschrieben hinterlegt. Der Duplikatefilter der jeweiligen Empfänger-Netzwerkkomponente 32A-B erkennt ein Duplikat eines bereits empfangenen Datentelegramms anhand der übereinstimmenden Gruppen-Absenderkennzeichnung und der übereinstimmenden Sequenznummer und verwirft es entsprechend.

Die Sender-Netzwerkkomponenten 31E-F sind ebenfalls zueinander geräteredundant ausgebildet. Die Sender-Netzwerkkomponenten 31E-F senden während ihres Betriebs über beide Ports in unterschiedliche Übertragungsrichtungen Datentelegramme mit identischem Nutzdateninhalt unter Verwendung jeweils individueller Absenderkennzeichnungen und identischer Sequenznummern an die zumindest eine Empfänger-Netzwerkkomponente 32A-B. Im Kommunikationsnetzwerk 30 befinden sich daher gleichzeitig immer vier redundante Datentelegramme der Sender-Netzwerkkomponenten 31E-F, von denen drei als Duplikate herausgefiltert werden müssen. Jeweils zwei der vier Datentelegramme weisen hierbei identische Absenderkennzeichnungen auf.

Zur Vergabe der identischen Sequenznummern sind die Sender-Netzwerkkomponenten 31E-F untereinander zeitsynchronisiert. Die Zusammengehörigkeit der Sender-Netzwerkkomponenten 31E-F ist in der jeweiligen Empfänger-Netzwerkkomponente in Form einer Gruppeninformation wie oben beschrieben hinterlegt. Der Duplikatefilter der jeweiligen Empfänger-Netzwerkkomponente 32A-B erkennt ein Duplikat eines bereits empfangenen Datentelegramms anhand der übereinstimmenden Gruppen-Absenderkennzeichnung und der übereinstimmenden Sequenznummer und verwirft es.

Zusammenfassend wird mit der Erfindung somit eine Möglichkeit beschrieben, mit der auch redundante Datentelegramme, die von unterschiedlichen, aber geräteredundant zueinander ausgebildeten Sender-Netzwerkkomponenten an eine Empfänger-Netzwerkkomponente versendet worden sind, hinsichtlich Duplikaten gefiltert werden können. Hierzu wurden Kriterien (Absenderkennzeichnung, Gruppenabsenderkennzeichnung, Sequenznummer) vorgestellt, anhand derer eine Erkennung solcher Datentelegramme, die einen identischen Nutzdateninhalt haben, stattfinden kann. Als besonders vorteilhaft wird es angesehen, dass durch die Erfindung eine Möglichkeit geschaffen wird, ohne größere Eingriffe in bestehende PRP- bzw. HSR-Kommunikationsnetzwerke auch geräteredundant ausgebildete Sender-Netzwerkkomponenten integrieren zu können. Hierzu ist lediglich innerhalb der Duplikatefilter eine Gruppeninformation zu hinterlegen und die Auswertung der aktuell empfangenen Datentelegramme anhand ihrer jeweiligen aus der Gruppeninformation entnommenen Gruppen-Absenderkennzeichnung durchzuführen.

## Patentansprüche

1. Empfänger-Netzwerkkomponente (13) zum Betrieb in einem Kommunikationsnetzwerk (10) eines Automatisierungssystems, wobei die Empfänger-Netzwerkkomponente (13) dazu eingerichtet ist, von Sender-Netzwerkkomponenten (12A-B) des Kommunikationsnetzwerks (10) redundant versendete Datentelegramme zu empfangen und Duplikate eines bereits empfangenen Datentelegramms zu verwerfen; wobei
- die Empfänger-Netzwerkkomponente (13) dazu eingerichtet ist, beim Empfangen eines aktuellen Datentelegramms von einer der Sender-Netzwerkkomponenten (12A-B) dieses daraufhin zu überprüfen, ob von einer anderen Sender-Netzwerkkomponente (12A-B) bereits ein Datentelegramm mit identischen Nutzdaten empfangen worden ist, und ein Datentelegramm mit einem erstmalig empfangenen Nutzdateninhalt weiterzuverarbeiten, und ein Datentelegramm mit solchen Nutzdaten, die bereits in einem früheren Datentelegramm einer anderen Sender-Netzwerckomponente (12A-B) empfangen worden sind, als Duplikat zu verwerfen; **dadurch gekennzeichnet, dass**
- die Empfänger-Netzwerkkomponente (13) dazu eingerichtet ist, die Überprüfung des aktuell empfangenen Datentelegramms unter Verwendung einer in dem Datentelegramm enthaltenen Absenderkennzeichnung durchzuführen, wobei
- die Empfänger-Netzwerkkomponente (13) eine Gruppeninformation über solche Sender-Netzwerkkomponenten (12A-B) umfasst, die während ihres Betriebs hinsichtlich ihres Nutzdateninhaltes identische Datentelegramme an die Empfänger-Netzwerkkomponente (13) senden; und
- die Empfänger-Netzwerkkomponente (13) dazu eingerichtet ist, die Überprüfung des aktuell empfangenen Datentelegramms unter Verwendung der Absenderkennzeichnung des aktuell empfangenen Datentelegramms und der Absenderkennzeichnungen der in der Gruppeninformation angegebenen Sender-Netzwerkkomponenten (12A-B) durchzuführen; und wobei
- die Gruppeninformation Absenderkennzeichnungen von Sender-Netzwerkkomponenten (12A-B) dergestalt enthält, dass eine Absenderkennzeichnung aller derjenigen Sender-Netzwerkkomponenten (12A-B), die während ihres Betriebs Datentelegramme mit identischem Nutzdateninhalt an die Empfänger-Netzwerkkomponente (13) senden, als Gruppen-Absenderkennzeichnung ausgewählt ist und die Absenderkennzeichnungen aller übrigen zugehörigen Sender-Netzwerkkomponenten (12A-B) der Gruppen-Absenderkennzeichnung zugeordnet werden.

2. Empfänger-Netzwerkkomponente (13) nach Anspruch 1,
**dadurch gekennzeichnet, dass**
- die Empfänger-Netzwerkkomponente (13) dazu eingerichtet ist, die Überprüfung des aktuell empfangenen Datentelegramms unter Verwendung einer in dem Datentelegramm enthaltenen Sequenznummer durchzuführen.

3. Empfänger-Netzwerkkomponente (13) nach Anspruch 1 oder Anspruch 2,
**dadurch gekennzeichnet, dass**
- die Empfänger-Netzwerkkomponente (13) auch dazu eingerichtet ist, beim Empfangen eines aktuellen Datentelegramms zu überprüfen, ob von derselben Sender-Netzwerkkomponente (12AB) bereits ein Datentelegramm mit identischen Nutzdaten empfangen worden ist, und ein Datentelegramm mit einem erstmalig empfangenen Nutzdateninhalt weiterzuverarbeiten und ein Datentelegramm mit solchen Nutzdaten, die bereits in einem früheren Datentelegramm derselben Sender-Netzwerkkomponente (12A-B) empfangen worden sind, als Duplikat zu verwerfen.

4. Kommunikationsnetzwerk (10) eines Automatisierungssystems mit einer Mehrzahl von Netzwerkkomponenten (12A-B, 13), die zum Austausch von Datentelegrammen miteinander in Verbindung stehen, wobei der Austausch von Datentelegrammen redundant erfolgt, wobei
- das Kommunikationsnetzwerk (10) zumindest zwei Sender-Netzwerkkomponenten (12A-B) umfasst, die während ihres Betriebs hinsichtlich ihres Nutzdateninhaltes identische Datentelegramme an zumindest eine Empfänger-Netzwerkkomponente (13) gemäß einem der Ansprüche 1-3 senden.

5. Kommunikationsnetzwerk (10) nach Anspruch 4, **dadurch gekennzeichnet, dass**
- zumindest eine der Sender-Netzwerkkomponenten (12A-B) dazu eingerichtet ist, an die zumindest eine Empfänger-Netzwerckomponente (13) ein Netzwerk-Konfigurationstelegramm zu versenden, das einerseits eine eigene Absenderkennzeichnung und andererseits Absenderkennzeichnungen aller solcher Sender-Netzwerkkomponenten (12A-B) enthält, die während ihres Betriebs hinsichtlich ihres Nutzdateninhaltes identische Datentelegramme wie die zumindest eine Sender-Netzwerkkomponente (12A-B) an die zumindest eine Empfänger-Netzwerkkomponente (13) senden.

6. Kommunikationsnetzwerk (10) nach einem der Ansprüche 4 oder 5, **dadurch gekennzeichnet, dass**
- die Sender-Netzwerkkomponenten (12A-B) dazu eingerichtet sind, den von ihnen versendeten Datentelegrammen zeitlich miteinander synchronisierte Sequenznummern zuzuordnen; und
- die zumindest eine Empfänger-Netzwerkkomponente (13) dazu eingerichtet ist, die Überprüfung des aktuell empfangenen Datentelegramms unter Verwendung der Sequenznummer durchzuführen.

7. Kommunikationsnetzwerk (10) nach einem der Ansprüche 4 bis 6, **dadurch gekennzeichnet, dass**
- das Kommunikationsnetzwerk (10) auch solche Sender-Netzwerkkomponenten (12A-B) umfasst, die selbst Datentelegramme mit identischen Nutzdaten an die zumindest eine Empfänger-Netzwerkkomponente (13) versenden, wobei diese Datentelegramme über unterschiedliche Kommunikationspfade des Kommunikationsnetzwerks (10) an die zumindest eine Empfänger-Netzwerkkomponente (13) versendet werden; und
- die zumindest eine Empfänger-Netzwerkkomponente (13) auch dazu eingerichtet ist, beim Empfangen eines aktuellen Datentelegramms zu überprüfen, ob von derselben Sender-Netzwerkkomponente (12A-B) bereits ein Datentelegramm mit identischen Nutzdaten empfangen worden ist, und ein Datentelegramm mit einem erstmalig empfangenen Nutzdateninhalt weiterzuverarbeiten, und ein Datentelegramm mit solchen Nutzdaten, die bereits in einem früheren Datentelegramm derselben Sender-Netzwerkkomponente (12A-B) empfangen worden sind, als Duplikat zu verwerfen.

8. Verfahren zum Betreiben eines Kommunikationsnetzwerks (10) eines Automatisierungssystems mit einer Mehrzahl von Netzwerkkomponenten (12A-B, 13), die zum Austausch von Datentelegrammen miteinander in Verbindung stehen, wobei der Austausch der Datentelegramme redundant erfolgt, wobei
- zumindest zwei Sender-Netzwerkkomponenten (12A-B) während ihres Betriebs hinsichtlich ihres Nutzdateninhaltes identische Datentelegramme an zumindest eine Empfänger-Netzwerkkomponente (13) senden;
- die zumindest eine Empfänger-Netzwerkkomponente (13) beim Empfangen eines aktuellen Datentelegramms von einer der Sender-Netzwerkkomponenten (12A-B) dieses daraufhin überprüft, ob von einer anderen Sender-Netzwerkkomponente (12A-B) bereits ein Datentelegramm mit identischen Nutzdaten empfangen worden ist, und ein Datentelegramm mit einem erstmalig empfangenen Nutzdateninhalt weiterverarbeitet und ein Datentelegramm mit solchen Nutzdaten, die bereits in einem früheren Datentelegramm einer anderen Sender-Netzwerkkomponente (12AB) empfangen worden sind, als Duplikat verwirft; **dadurch gekennzeichnet, dass**
- die Empfänger-Netzwerkkomponente (13) die Überprüfung des aktuell empfangenen Datentelegramms unter Verwendung einer in dem Datentelegramm enthaltenen Absenderkennzeichnung durchführt, wobei
- die Empfänger-Netzwerkkomponente (13) eine Gruppeninformation über solche Sender-Netzwerkkomponenten (12A-B) umfasst, die während ihres Betriebs hinsichtlich ihres Nutzdateninhaltes identische Datentelegramme an die Empfänger-Netzwerkkomponente (13) senden; und
- die Empfänger-Netzwerkkomponente (13) die Überprüfung des aktuell empfangenen Datentelegramms unter Verwendung der Absenderkennzeichnung des aktuell empfangenen Datentelegramms und der Absenderkennzeichnungen der in der Gruppeninformation angegebenen Sender-Netzwerkkomponenten (12A-B) durchführt; und wobei
- die Gruppeninformation Absenderkennzeichnungen von Sender-Netzwerkkomponenten (12A-B) dergestalt enthält, dass eine Absenderkennzeichnung aller derjenigen Sender-Netzwerkkomponenten (12A-B), die während ihres Betriebs Datentelegramme mit identischem Nutzdateninhalt an die Empfänger-Netzwerkkomponente (13) senden, als Gruppen-Absenderkennzeichnung ausgewählt ist und die Absenderkennzeichnungen aller übrigen zugehörigen Sender-Netzwerkkomponenten (12A-B) der Gruppen-Absenderkennzeichnung zugeordnet werden.

9. Verfahren nach Anspruch 8, **dadurch gekennzeichnet, dass**
- die Sender-Netzwerkkomponenten (12A-B) den von ihnen versendeten Datentelegrammen zeitlich miteinander synchronisierte Sequenznummern zuordnen; und
- die zumindest eine Empfänger-Netzwerkkomponente (13) die Überprüfung des aktuell empfangenen Datentelegramms unter Verwendung der Sequenznummer durchführt.

## Claims

1. Receiver network component (13) for operation in a communication network (10) of an automation system, wherein the receiver network component (13) is set up to receive data messages sent redundantly by transmitter network components (12A-B) of the communication network (10) and to reject duplicates of an already received data message;
wherein
- the receiver network component (13) is set up to be prompted by reception of a current data message from one of the transmitter network components (12A-B) to check said data message for whether a data message with identical useful data has already been received from another transmitter network component (12A-B), and to process a data message with a useful data content received for the first time further, and to reject as a duplicate a data message with such useful data as have already been received in an earlier data message from another transmitter network component (12A-B); **characterized in that**
- the receiver network component (13) is set up to perform the check on the currently received data message using a sender identifier contained in the data message, wherein
- the receiver network component (13) comprises a group information item about such transmitter network components (12A-B) as send identical, in terms of their useful data content, data messages to the receiver network component (13) while they are operating; and
- the receiver network component (13) is set up to perform the check on the currently received data message using the sender identifier of the currently received data message and the sender identifiers of the transmitter network components (12A-B) indicated in the group information item; and wherein
- the group information item contains sender identifiers of transmitter network components (12A-B) such that a sender identifier of all those transmitter network components (12A-B) that send data messages with identical useful data content to the receiver network component (13) while they are operating is selected as a group sender identifier and the sender identifiers of all other associated transmitter network components (12A-B) are allocated to the group sender identifier.

2. Receiver network component (13) according to Claim 1, **characterized in that**
- the receiver network component (13) is set up to perform the check on the currently received data message using a sequence number contained in the data message.

3. Receiver network component (13) according to Claim 1 or Claim 2,
**characterized in that**
- the receiver network component (13) is also set up to be prompted by reception of a current data message to check whether a data message with identical useful data has already been received from the same transmitter network component (12A-B), and to process a data message with a useful data content received for the first time further and to reject as a duplicate a data message with such useful data as have already been received in an earlier data message from the same transmitter network component (12A-B).

4. Communication network (10) of an automation system having a plurality of network components (12A-B, 13) that are connected to one another for the purpose of interchanging data messages, wherein data messages are interchanged redundantly, wherein
- the communication network (10) comprises at least two transmitter network components (12A-B) that send identical, in terms of their useful data content, data messages to at least one receiver network component (13) according to one of Claims 1 to 3 while they are operating.

5. Communication network (10) according to Claim 4, **characterized in that**
- at least one of the transmitter network components (12A-B) is set up to send to the at least one receiver network component (13) a network configuration message that contains firstly a dedicated sender identifier and secondly sender identifiers of all such transmitter network components (12A-B) as send identical, in terms of their useful data content, data messages, like the at least one transmitter network component (12A-B), to the at least one receiver network component (13) while they are operating.

6. Communication network (10) according to either of Claims 4 and 5,
**characterized in that**
- the transmitter network components (12A-B) are set up to allocate to the data messages sent by them sequence numbers that are time-synchronized to one another; and
- the at least one receiver network component (13) is set up to perform the check on the currently received data message using the sequence number.

7. Communication network (10) according to one of Claims 4 to 6,
**characterized in that**
- the communication network (10) also comprises such transmitter network components (12A-B) as themselves send data messages with identical useful data to the at least one receiver network component (13), wherein these data messages are sent to the at least one receiver network component (13) via different communication paths of the communication network (10); and
- the at least one receiver network component (13) is also set up to be prompted by reception of a current data message to check whether a data message with identical useful data has already been received from the same transmitter network component (12A-B), and to process a data message with a useful data content received for the first time further, and to reject as a duplicate a data message with such useful data as have already been received in an earlier data message from the same transmitter network component (12A-B).

8. Method for operating a communication network (10) of an automation system having a plurality of network components (12A-B, 13) that are connected to one another for the purpose of interchanging data messages, wherein the data messages are interchanged redundantly,
wherein
- at least two transmitter network components (12A-B) send identical, in terms of their useful data content, data messages to at least one receiver network component (13) while they are operating;
- the at least one receiver network component (13) is prompted by reception of a current data message from one of the transmitter network components (12A-B) to check said data message for whether a data message with identical useful data has already been received from another transmitter network component (12A-B), and processes a data message with a useful data content received for the first time further and rejects as a duplicate a data message with such useful data as have already been received in an earlier data message from another transmitter network component (12A-B); **characterized in that**
- the receiver network component (13) performs the check on the currently received data message using a sender identifier contained in the data message, wherein
- the receiver network component (13) comprises a group information item about such transmitter network components (12A-B) as send identical, in terms of their useful data content, data messages to the receiver network component (13) while they are operating; and
- the receiver network component (13) performs the check on the currently received data message using the sender identifier of the currently received data message and the sender identifiers of the transmitter network components (12A-B) indicated in the group information item; and wherein
- the group information item contains sender identifiers of transmitter network components (12A-B) such that a sender identifier of all those transmitter network components (12A-B) that send data messages with identical useful data content to the receiver network component (13) while they are operating is selected as a group sender identifier and the sender identifiers of all other associated transmitter network components (12A-B) are allocated to the group sender identifier.

9. Method according to Claim 8,
**characterized in that**
- the transmitter network components (12A-B) allocate to the data messages sent by them sequence numbers that are time-synchronized to one another; and
- the at least one receiver network component (13) performs the check on the currently received data message using the sequence number.

## Revendications

1. Composant (13) de réseau-récepteur, destiné à fonctionner dans un réseau (10) de communication d'un système d'automatisation, le composant (13) de réseau-récepteur étant conçu pour recevoir des télégrammes de données envoyés de manière redondante par des composants (12A-B) de réseau-émetteur du réseau (10) de communication et pour rejeter des doubles d'un télégramme de données déjà reçu ;
dans lequel
- le composant (13) de réseau-récepteur est conçu pour, à la réception d'un télégramme de données instantané d'un composant (12A-B) de réseau émetteur, le contrôler sur le point de savoir si un télégramme de données, ayant des données utiles identiques, est déjà reçu d'un autre composant (12A-B) de réseau-émetteur et pour continuer à traiter un télégramme de données ayant un contenu de données utiles reçu pour la première fois et pour rejeter, comme double, un télégramme de données, ayant des données utiles, qui ont déjà été reçues dans un télégramme de données antérieur d'un autre composant (12A-B) de réseau-émetteur ;
**caractérisé en ce que**
- le composant (13) de réseau-récepteur est conçu pour effectuer le contrôle du télégramme de données reçu instantanément, en utilisant une caractérisation d'expéditeur contenue dans le télégramme de données, dans lequel
- le composant (13) de réseau-récepteur comprend une information de groupe sur les composants (12A-B) de réseau-émetteur, qui, pendant son fonctionnement, envoient au composant (13) de réseau-récepteur des télégrammes de données identiques du point de vue de leur contenu de données utiles et
- le composant (13) de réseau-récepteur est conçu pour effectuer le contrôle du télégramme de données reçu instantanément, en utilisant la caractérisation d'expéditeur du télégramme de données reçu instantanément et les caractérisations d'expéditeur des composants (12A-B) du réseau-émetteur indiqué dans l'information de groupe et dans lequel
- l'information de groupe contient des caractérisations d'expéditeur de composants (12A-B) de réseau-émetteur, de manière à sélectionner, comme caractérisation d'expéditeur de groupe une caractérisation d'expéditeur de tous les composants (12A-B) de réseau-émetteur, qui, pendant son fonctionnement, envoie au composant (13) de réseau-récepteur des télégrammes de données à contenu de données utiles identique et de manière à associer à la caractérisation d'expéditeur de groupe les caractérisations d'expéditeur de tous les autres composants (12A-B) de réseau-émetteur.

2. Composant (13) de réseau-récepteur suivant la revendication 1,
**caractérisé en ce que**
- le composant (13) de réseau-récepteur est conçu pour effectuer le contrôle du télégramme de données reçu instantanément, en utilisant un numéro de séquence contenu dans le télégramme de données.

3. Composant (13) de réseau-récepteur suivant la revendication 1 ou la revendication 2,
**caractérisé en ce que**
- le composant (13) de réseau-récepteur est conçu pour, à la réception d'un télégramme de données instantané, contrôler si un télégramme de données à données utiles identiques a déjà été reçu du même composant (12A-B) de réseau-émetteur et pour continuer à traiter un télégramme de données ayant un contenu de données utiles reçu pour la première fois et pour rejeter, comme double, un télégramme de données ayant des données utiles, qui ont été déjà reçues dans un télégramme de données antérieur du même composant (12A-B) de réseau-émetteur.

4. Réseau (10) de communication d'un système d'automatisation ayant une pluralité de composants (12A-B, 13) de réseau, qui sont en liaison entre eux pour échanger des télégrammes de données, l'échange de télégrammes de données s'effectuant de manière redondante,
dans lequel
- le réseau (10) de communication comprend au moins deux composants (12A-B) de réseau-émetteur, qui, pendant son fonctionnement, envoient, à au moins un composant (13) de réseau-récepteur suivant l'une des revendications 1 à 3, des télégrammes de données identiques en ce qui concerne son contenu de données utiles.

5. Réseau (10) de communication suivant la revendication 4, **caractérisé en ce que**
- au moins l'un des composants (12A-B) de réseau-émetteur est conçu pour envoyer, au au moins un composant (13) de réseau-récepteur, un télégramme de configuration de réseau, qui contient d'une part une caractérisation propre d'expéditeur et d'autre part des caractérisations d'expéditeur de tous les composants (12A-B) de réseau-émetteur, qui, pendant son fonctionnement, envoient, au au moins un composant de réseau-récepteur, comme le au moins un composant (12A-B) de réseau-émetteur, des télégrammes de données identiques du point de leur contenu de données utiles.

6. Réseau (10) de communication suivant l'une des revendications 4 ou 5,
**caractérisé en ce que**
- les composants (12A-B) de réseau-émetteur sont conçus pour associer, aux télégrammes de données qu'ils envoient, des numéros de séquences synchronisées entre elles dans le temps et
- le au moins un composant (13) de réseau-récepteur est conçu pour effectuer le contrôle du télégramme de données reçu instantanément, en utilisant le numéro de séquence.

7. Réseau (10) de communication suivant l'une des revendications 4 à 6,
**caractérisé en ce que**
- le réseau (10) de communication comprend aussi des composants (12A-B) de réseau-émetteur, qui envoient eux-mêmes des télégrammes de données à données utiles identiques au au moins un composant (13) de réseau-récepteur, ces télégrammes de données étant envoyés par des trajets de communication différents du réseau (10) de communication au au moins un composant (13) de réseau-récepteur et
- le au moins un composant (13) de réseau-récepteur est conçu pour, à la réception d'un télégramme de données instantané, contrôler si un télégramme de données, ayant des données utiles identiques, a déjà été reçu du même composant (12A-B) de réseau-émetteur et pour continuer à traiter un télégramme de données ayant un contenu de données utiles reçu pour la première fois et à rejeter, comme double, un télégramme de données ayant des données utiles, qui ont été déjà reçues dans un télégramme de données antérieur du même composant (12A-B) de réseau-émetteur.

8. Procédé pour faire fonctionner un réseau (10) de communication d'un système d'automatisation ayant une pluralité de composants (12A-B, 13) de réseau, qui sont en liaison entre eux pour échanger des télégrammes de données, l'échange des télégrammes de données s'effectuant de manière redondante,
dans lequel
- au moins deux composants (12A-B) de réseau-émetteur envoient, pendant son fonctionnement, à au moins un composant (13) de réseau-récepteur, des télégrammes de données identiques du point de vue de leur contenu de données utiles ;
- le au moins un composant (13) de réseau-récepteur contrôle, à la réception d'un télégramme de données instantané de l'un des composants (12A-B) de réseau-émetteur, ce télégramme sur le point de savoir si un télégramme de données à données utiles identiques a déjà été reçu d'un autre composant (12A-B) de réseau-émetteur et continue à traiter un télégramme de données ayant un contenu de données utiles reçu pour la première fois et rejette, comme double, un télégramme de données à données utiles, qui ont déjà été reçues dans un télégramme de données antérieur d'un autre composant (12A-B) de réseau-émetteur,
**caractérisé en ce que**
- le composant (13) de réseau-récepteur effectue le contrôle du télégramme de données reçu instantanément, en utilisant une caractérisation d'expéditeur contenue dans le télégramme de données, dans lequel
- le composant (13) de réseau-récepteur comprend une information de groupe sur les composants (12A-B) de réseau-émetteur, qui, pendant son fonctionnement, envoient, aux composants (13) de réseau-récepteur des télégrammes de données identiques en ce qui concerne leur contenu de données utiles et
- le composant (13) de réseau-récepteur effectue le contrôle du télégramme de données reçu instantanément, en utilisant la caractérisation d'expéditeur du télégramme de données reçu instantanément, et les caractérisations d'expéditeur des composants (12A-B) de réseau-émetteur indiqués dans l'information de groupe et dans lequel
- l'information de groupe contient des caractérisations d'expéditeur de composants (12A-B) de réseau-émetteur, de manière à sélectionner, comme caractérisation d'expéditeur de groupe, une caractérisation d'expéditeur de tous les composants (12A-B) de réseau-émetteur, qui envoient au composant (13) de réseau-récepteur, pendant son fonctionnement, des télégrammes de données à contenu de données utiles identiques, et à associer les caractérisations d'expéditeur de tous les autres composants (12A-B) de réseau-émetteur à la caractérisation d'expéditeur de groupe.

9. Procédé suivant la revendication 8,
**caractérisé en ce que**
- les composants (12A-B) de réseau-émetteur associent des numéros de séquences synchronisées entre elles dans le temps aux télégrammes de donnée qui leur sont envoyés et
- le au moins un composant (13) de réseau récepteur effectue le contrôle du télégramme de données reçu instantanément, en utilisant le numéro de séquence.
